# EUROPÄISCHE PATENTSCHRIFT

(11) **EP 1 283 154 B1**
(45) Veröffentlichungstag und Bekanntmachung des Hinweises auf die Patenterteilung: **20.09.2006**
(21) Anmeldenummer: 02016692.2
(22) Anmeldetag: 26.07.2002
(51) Int. Cl.: B62D 65/00

(54) **Verfahren zum Montieren einer Tür im Türrahmen einer Fahrzeugkarosserie sowie eine Türmontagevorrichtung hierfür**
Method for mounting a door into a door frame of a vehicle , and machine therefor
Procédé pour le montage d'une porte dans un cadre de porte d'une carrosserie de véhicule , et son appareil de montage

(30) Priorität: 07.08.2001 DE 10138662
(43) Veröffentlichungstag der Anmeldung: 12.02.2003
(73) Patentinhaber: ADAM OPEL AG, 65423 Rüsselsheim (DE)
(72) Erfinder: Samsinger, Peter, Dipl.-Ing., 65428 Rüsselsheim (DE); Regner, Dieter, Dipl.-Ing., 65428 Rüsselsheim (DE); Manns, Kurt-Peter, Dipl.-Ing., 55283 Nierstein (DE); Kirsch, Frank, Dipl.-Ing., 69181 Leimen (DE)

(56) Entgegenhaltungen:
- DE-A- 3 342 570
- DE-A- 3 620 536
- DE-A- 4 214 863
- DE-C- 3 443 312
- US-A- 6 122 819

## Beschreibung

Die Erfindung bezieht sich auf ein Verfahren zum Montieren einer Tür im Türrahmen einer Fahrzeugkarosserie gemäß Oberbegriff des Anspruchs 1 und auf eine für dieses Verfahren einsetzbare Türmontagevorrichtung gemäß Oberbegriff des Anspruchs 3, siehe DE-A-3342570..

Ein im Unternehmen der Anmelderin eingesetztes Verfahren besteht darin, dass die Tür mittels eines Montagerahmens in den Türrahmen der Karosserie lagegenau eingesetzt wird. Anschließend werden die Scharniere mit dem Türrahmen - d. h. mit der jeweiligen A- bzw. B-Säule der Karosserie - verschweißt. Dieses Verfahren ist genau, aber sehr aufwendig. Es wurde schon vorgeschlagen, die Scharniere zu verschrauben. Es hat sich aber gezeigt, dass damit keine lagegenaue Befestigung der Scharniere möglich ist, vielmehr kam es wegen der Anzugskräfte, mit denen die Schrauben festgeschraubt werden, zu einem Verdrehen bzw. Verkanten des Scharniers, mit der Folge, dass die Tür aus ihrer vorgesehenen Lage herausbewegt und das Spaltmaß verändert wird. Man könnte dies mit einem speziellen Schraubwerkzeug vermeiden, mit dem alle Schrauben gleichzeitig und gleichmäßig angezogen würden. Ein solches Werkzeug ist sehr teuer und umständlich in der Handhabung.

Die Erfindung beruht somit auf dem Problem, eine Befestigungsmöglichkeit für die Tür in einem Fahrzeugkarosserierahmen zu schaffen, die rasch hergestellt werden kann und wobei es zu keinen Abweichungen von der vorgesehenen Sollposition für die Tür kommt.

Zur Lösung des Problems wird ein Verfahren zum Montieren einer Tür im Türrahmen einer Fahrzeugkarosserie mit den folgenden Schritten unterbreitet:
Die Tür wird lösbar an einem Montagerahmen befestigt;
der Montagerahmen wird so zur Karosserie ausgerichtet, dass die Tür sich lagegenau in der Montageposition befindet;
ein Scharnier wird mittels eines Andrückspanners in seine Montageposition gebracht, wodurch es druckbeaufschlagt flächig an Anschlagflächen an der Tür und dem Türrahmen anliegt;
das Scharnier wird mit der Tür und dem Türrahmen verschraubt.

Der entscheidende Punkt ist, dass das Scharnier von dem Andrückspanner nicht nur in seine Position gebracht wird, sondern vielmehr durch eine gleichmäßig aufgebrachte Druckbelastung die Anzugskräfte der Schrauben vorweggenommen werden, so dass später die Schrauben sukzessive angezogen werden können, ohne dass es zu Verkantungen der Scharniere kommt. Somit kann ein Montagearbeiter ein Scharnier mit den üblichen Schraubwerkzeugen festschrauben. Spezielle Sonderkonstruktionen des Werkzeuges sind nicht notwendig.

Um den Bearbeitungsvorgang zu beschleunigen, kann vorgesehen werden, dass das Scharnier mittels Schrauben lose mit der Tür verbunden wird, bevor diese in ihre Montageposition gebracht wird. Das Scharnier wird somit mit der Tür an die Fahrzeugkarosserie angebracht und befindet sich dann gleichzeitig in einer Vorposition, in der es vom Andrückspanner erfasst werden kann und - wie oben beschrieben - mit einer Andrückkraft beaufschlagt wird.

Die Türmontagevorrichtung, mit der dies bewerkstelligt werden kann, ist in Anspruch 3 beschrieben. Der entscheidende Punkt ist, dass der Andrückspanner Teil des Montagerahmens ist. Damit entfällt ein gesonderter Rahmen für den Andrückspanner. Gleichzeitig wird erreicht, dass der Andrückspanner sich stets in der richtigen Position zur Tür bzw. zum Scharnier befindet.

Wie in der Automobilindustrie allgemein üblich, wird die Fahrzeugkarosserie über ein Förderband geführt. Dieses Förderband wird auch kurz als Band bezeichnet. Die Zuführung der Tür zur Karosserie erfolgt mittels eines Drehtisches. Auf diesem Drehtisch sind mehrere Montagerahmen befestigt. Der Rahmen, der sich gerade in einer vom Band abgewandten Lage befindet, kann manuell oder mittels eines Roboters mit einer Tür versehen werden, die durch eine Drehung des Drehtisches in die der Karosserie zugewandten Montageposition gebracht wird.

Die Schrauben, mit denen das Scharnier mit der Tür befestigt wird, werden vorzugsweise in Gewindelöcher eingeschraubt, die sich an der Tür befinden. Die Verbindung mit dem Türrahmen erfolgt mittels Schrauben, die von der Innenseite der Karosserie her in Gewindelöcher in ein Scharnierteil eingeschraubt werden, das außen an der Karosserie anliegt.

Im Folgenden soll anhand eines Ausführungsbeispiels die Erfindung näher erläutert werden. Dazu zeigen
- Fig. 1: ein Montageband mit zwei Fahrzeugkarosserien und einem seitlich angeordneten Drehtisch mit einer Türmontagevorrichtung,
- Fig. 2: den Teil des Drehtisches mit einem Türmontagerahmen,
- Fig. 3: einen Querschnitt durch einen Türrahmen und eine Karosserie sowie die Anordnung des Scharniers.

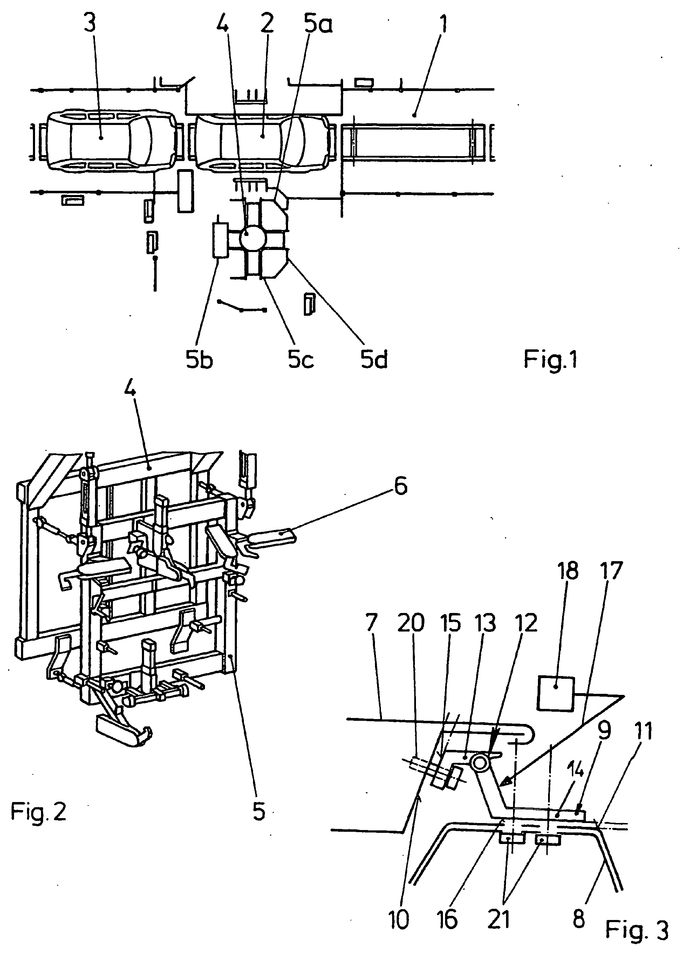

Figur 1 zeigt in Draufsicht ein Montageband 1 mit einer Karosserie 2 in der Montageposition und mit einer Karosserie 3 in Warteposition. Neben dem Montageband 1 befindet sich ein Drehtisch 4 mit vier Montagerahmen 5a, 5b, 5c, 5d. Der jeweils außen liegende Montagerahmen 5 c wird mit einer neuen Tür 7 bestückt und durch zweimaliges Drehen des Drehtisches 4 um 90° in die Montageposition an der Karosserie 2 gebracht, die gemäß der Figur 1 vom Montagerahmen mit dem Bezugszeichen 5a eingenommen wird,

Ein Montagerahmen 5 ist in der Figur 2 im Detail dargestellt. Er befindet sich an einem Gestell des Drehtisches 4 und ist mit mehreren Spannern 6 versehen, mit denen die Tür 7 am Montagerahmen 5 gehalten ist.

Figur 3 zeigt den Schnitt durch die Tür 7 und einen Türrahmen 8 in der Karosserie 2 sowie ein Scharnier 9. Die Tür 7 weist eine Anschlagfläche 10 auf, der Türrahmen 8 eine Anschlagfläche 11. Das Scharnier 9 besteht aus zwei gelenkig in einem Drehgelenk 12 miteinander verbundenen Teilen 13, 14, die je eine Anlagefläche 15, 16 besitzen. Die Anlagefläche 15 des einen Teiles 13 korrespondiert mit der Anschlagfläche 10 der Tür 7. Die Anlagefläche 16 des anderen Teiles 14 korrespondiert mit der Anschlagfläche 11 am Türrahmen 8.

Der Pfeil 17 deutet an, welche Kraft ein Andrückspanner 18, im Bild schematisch dargestellt, auf das Scharnier 9 ausübt. Die im Bild noch dargestellte Spalte zwischen den Anlageflächen 15, 16 und den korrespondierenden Anschlagflächen 10, 11, die in mehr oder weniger starker Form vorhanden sind, wenn das Scharnier 9 lediglich gehalten würde, werden durch die vom Andrückspanner 18 ausgeübte Kraft geschlossen, so dass das Scharnier 9 flächig an der Tür 7 und dem Türrahmen 8 anliegt. Nun kann das Scharnier 9 mit der Tür 7 und dem Türrahmen 8 verschraubt werden. Die strichpunktiert angedeutete Schraube 20 an der Tür 7 liegt etwas oberhalb der dargestellten Schnittfläche, eine weitere etwas unterhalb. Die zu diesen Schrauben korrespondierenden Gewindelöcher befindet sich in der Tür 7. Der andere Teil 14 des Scharniers 9 wird mit Schrauben 21 am Türrahmen 8 befestigt. Die Schrauben 21 werden von innen gesetzt, so dass die entsprechenden Gewindelöcher im Scharnier 9 ausgebildet sind.

Die einzelnen Schrauben 20, 21 können nun vom Montagearbeiter nach und nach angezogen werden, ohne dass befürchtet werden muss, dass durch Anziehen einer Schraube das Scharnier 9 verkantet und durch ein Anziehen der folgenden Schraube die Tür 7 in eine von der vorgesehenen Sollposition abweichende Position gezogen wird.

### Bezugszeichenliste

- 1: Montageband
- 2: Karosserie
- 3: Karosserie
- 4: Drehtisch
- 5: Montagerahmen

- 6: Spanner
- 7: Tür
- 8: Türrahmen
- 9: Scharnier
- 10: Anschlagfläche

- 11: Anschlagfläche
- 12: Drehgelenk
- 13: Teil
- 14: Teil
- 15: Anlagefläche

- 16: Anlagefläche
- 17: Pfeil
- 18: Andrückspanner
- 20: Schraube

- 21: Schraube

## Patentansprüche

1. Verfahren zum Montieren einer Tür im Türrahmen einer Fahrzeugkarosserie mit den folgenden Schritten:
Die Tür (7) wird lösbar an einem Montagerahmen (5) befestigt und
der Montagerahmen (5) wird so zur Karosserie (3) ausgerichtet, dass die Tür (7) sich lagegenau in der Montageposition befindet, **dadurch gekennzeichnet, daß**
ein Scharnier (9) mittels eines Andrückspanners (18) in seine Montageposition gebracht wird, wobei es druckbeaufschlagt flächig an Anschlagflächen (10, 11) an der Tür (7) und dem Türrahmen (8) anliegt;
das Scharnier (9) wird mit der Tür (7) und dem Türrahmen (8) verschraubt.

2. Verfahren nach Anspruch 1, **dadurch gekennzeichnet, dass** das Scharnier mittels Schrauben lose mit der Tür verbunden wird, bevor diese in ihre Montageposition gebracht wird.

3. Türmontagevorrichtung mit einem Montagerahmen (5), an den eine in den Türrahmen (8) einer Fahrzeugkarosserie (3) zu montierende Tür (7) lösbar befestigbar ist, **dadurch gekennzeichnet, daß** der Montagerahmen (5) mindestens einen Spanner (6) aufweist, um ein die Tür (7) und den Türrahmen (8) zu verbindendes Scharnier (9) in einer Montageposition zu halten, bei der Anlageflächen (15, 16) des Scharniers (9) an eine Anschlagfläche (10) der Tür (7) und an eine Anschlagfläche (11) des Türrahmens (8) spaltfrei angedrückt werden, um das Scharnier (9) mit der Tür (7) und dem Türrahmen (8) verschrauben zu können.

4. Türmontagevorrichtung nach Anspruch 3, **dadurch gekennzeichnet, dass** diese sich auf einem Drehtisch (4) an einem Montageband (1) für die Fahrzeugkarosserie (2, 3) befindet.

5. Türmontagevorrichtung nach Anspruch 3, **dadurch gekennzeichnet, dass** an dem am Türrahmen (8) anliegenden Abschnitt des Scharniers (9) sich eine Gewindebohrung befindet, um das Scharnier (9) mit dem Türrahmen (8) verschrauben zu können.

6. Türmontagevorrichtung nach Anspruch 3, **dadurch gekennzeichnet, dass** an dem an der Tür (7) anliegenden Abschnitt sich mindestens ein Schraubloch für eine Schraube (20) befindet, mit der das Scharnier (9) mit der Tür (7) verschraubt wird.

## Claims

1. A method of mounting a door in the door frame of a vehicle body with the following steps:
The door (7) is fixed in releasable manner to a mounting frame (5) and
the mounting frame (5) is aligned with respect to the bodywork (3) in such a way that the door (7) is located precisely in the mounting position, **characterized in that**
a hinge (9) is brought into its mounting position by means of a pressure tensioner (18) wherein it rests flatly under pressure against stop faces (10, 11) on the door (7) and the door frame (8);
the hinge (9) is bolted to the door (7) and the door frame (8).

2. A method in accordance with Claim 1, **characterized in that** the hinge is loosely connected by means of bolts to the door before it is brought into its mounting position.

3. A door mounting device comprising a mounting frame (5) to which a door (7) that is to be mounted in the door frame (8) of a vehicle body (3) is adapted to be fixed in releasable manner, **characterized in that** the mounting frame (5) comprises at least one tensioner (6) in order to hold a hinge (9) used for connecting the door (7) and the door frame (8) in a mounting position, in which contact surfaces (15, 16) of the hinge (9) are pressed onto a stop face (10) of the door (7) and onto a stop face (11) of the door frame (8) in gap-free manner in order to enable the hinge (9) to be bolted to the door (7) and the door frame (8).

4. A door mounting device in accordance with Claim 3, **characterized in that** it is located on a turntable (4) at an assembly line (1) for the vehicle body (2, 3).

5. A door mounting device in accordance with Claim 3, **characterized in that** a threaded bore is located in the section of the hinge (9) resting against the door frame (8) in order to enable the hinge (9) to be bolted to the door frame (8).

6. A door mounting device in accordance with Claim 3, **characterized in that** at least one bolt hole for a bolt (20), with which the hinge (9) is bolted to the door (7), is located in the section resting against the door (7).

## Revendications

1. Procédé de montage d'une porte dans le cadre de porte d'une caisse de véhicule, comportant les étapes suivantes :
- la porte (7) est fixée de manière amovible à un châssis de montage (5) et,
- le châssis de montage (5) est ajusté par rapport à la caisse (3), de telle sorte que la porte (7) se trouve dans la position exacte en position de montage, **caractérisé en ce que**
- une charnière (9) est amenée dans sa position de montage au moyen d'un serre-joint (18), par lequel, sous l'effet d'une pression, ladite charnière est en appui sur toute sa surface contre des surfaces de butée (10, 11) sur la porte (7) et sur le cadre de porte (8) ;
- la charnière (9) est vissée sur la porte (7) et le cadre de porte (8).

2. Procédé selon la revendication 1, **caractérisé en ce que** la charnière est assemblée par vissage de manière amovible sur la porte, avant que cette dernière ne soit amenée dans sa position de montage.

3. Dispositif de montage d'une porte, comportant un châssis de montage (5) auquel peut être fixée de manière amovible une porte (7) destinée à être montée dans un cadre de porte (8) d'une caisse de véhicule (3), **caractérisé en ce que** le châssis de montage (5) comporte au moins un serre-joint (6) destiné à maintenir une charnière (9) reliant la porte (7) et le cadre de porte (8) dans une position de montage, dans laquelle des surfaces d'appui (15, 16) de la charnière (9) sont en appui sans jeu contre une surface de butée (10) de la porte (7) et contre une surface de butée (11) du cadre de porte (8), afin de pouvoir visser la charnière (9) sur la porte (7) et sur le cadre de porte (8).

4. Dispositif de montage d'une porte selon la revendication 3, **caractérisé en ce que** celui-ci est disposé sur un plateau rotatif (4) sur une chaîne de montage (1) de caisse de véhicule (2, 3).

5. Dispositif de montage d'une porte selon la revendication 3, **caractérisé en ce que** sur la partie de la charnière (9) disposée sur le cadre de porte (8) est réalisé un perçage taraudé permettant le vissage de la charnière (9) sur le cadre de porte (8).

6. Dispositif de montage d'une porte selon la revendication 3, **caractérisé en ce que** sur la partie disposée sur la porte (7) est réalisé au moins un trou taraudé pour une vis (20), avec laquelle la charnière (9) est vissée sur la porte (7).
